# EUROPÄISCHE PATENTANMELDUNG

(11) **EP 4 275 997 A1**
(43) Veröffentlichungstag der Anmeldung: **15.11.2023**
(21) Anmeldenummer: 23171344.7
(22) Anmeldetag: 03.05.2023
(51) Int. Cl.: B62J 9/22, B62K 19/40, B62J 11/00, B62J 7/08

(54) **BEFESTIGUNGSEINRICHTUNG**

(30) Priorität: 11.05.2022 DE 202022102567 U
(71) Anmelder: ZEG Zweirad-Einkaufs-Genossenschaft eG, 50739 Köln (DE)
(72) Erfinder: Manderla, Gregor, 50733 Köln (DE)
(74) Vertreter: Patentanwälte Buschhoff Hennicke Althaus

(57) **Zusammenfassung**

Die Erfindung hat eine an einem Fahrrad montierbare Befestigungseinrichtung zum Gegenstand, die im Wesentlichen aus einem elastischen, länglichen Spannmittel (17) besteht, das mindestens an einem seiner beiden Endbereiche (19) mit einem Montageelement (20) zur formschlüssigen Ankopplung an einem Haltekopf (21) einer Anschlussschraube (16) versehen ist. Die Anschlussschraube (16) ist dabei an einem geeigneten, an einem Rahmenteil (14) des Fahrrads vorgesehenen Gewindeanschluss (15) so angeschraubt, dass sich der Haltekopf (21) bei fest montierter Anschlussschraube (16) in einem Abstand von dem Rahmenteil (14) befindet und von dem Montageelement (20) wenigstens teilweise übergriffen wird. Das Spannmittel kann ein- oder mehrfach um das Rahmenteil herumgeschlungen werden und mit dem Montagelement an dem Haltekopf der Anschlussschraube festgelegt werden. Zwischen dem Spannmittel und dem Rahmenteil können insbesondere leichte, zu transportierende Gegenstände wie eine Regenjacke (29) schnell und zuverlässig eingeklemmt werden. (Fig.2)

## Beschreibung

Die Erfindung betrifft eine an einem Fahrrad montierbare Befestigungseinrichtung, im Wesentlichen bestehend aus einem elastischen, länglichen Spannmittel, das mindestens an einem Endbereich mit einem Montageelement zur formschlüssigen Ankopplung an einem Haltekopf einer Anschlussschraube versehen ist.

Wenn man mit dem Fahrrad unterwegs ist, gestaltet es sich oft problematisch, Gegenstände, die bei der Fahrt nicht fehlen sollen, angemessen zu verstauen. Zwar gibt es Packtaschen, die an Gepäckträgern, am Sattel oder auch am Lenker angebracht werden können und in denen man Gepäck gut unterbringen kann. Es ist aber im Allgemeinen erforderlich, die Fahrt zu unterbrechen und den gewünschten Gegenstand aus dem Gepäckstück hervor zu suchen, was unter Umständen geraume Zeit dauern kann. Oft ist es wünschenswert, eine Regenjacke oder einen anderen, leichten Gegenstand schnell verfügbar zu haben. Insbesondere bei Fahrrädern, die über keine sonstigen Anbauteile (Gepäckträger) für Gepäcktaschen verfügen, ist es bislang nicht zufriedenstellend möglich, mitzuführende Gegenstände zuverlässig und schnell am Rad zu befestigen, so dass der Fahrer meistens darauf angewiesen ist, solche Teile in einem Rucksack oder einer Tasche seines Fahrradtrikots unterzubringen.

Aufgabe der Erfindung ist es, eine Befestigungseinrichtung zu schaffen, mit der leichtere Gegenstände wie z.B. Jacken, Verpflegung oder ein Werkzeugset an einem Rahmenteil des Fahrrads festgelegt werden können.

Gelöst wird diese Aufgabe mit einer Befestigungseinrichtung der vorstehend genannten Art, wobei die Anschlussschraube an einem geeigneten, an einem Rahmenteil des Fahrrads vorgesehenen Gewindeanschluss so angeschraubt ist, dass sich der Haltekopf bei fest montierter Anschlussschraube in einem Abstand von dem Rahmenteil befindet und von dem Montageelement wenigstens teilweise übergriffen wird.

Mit dieser Ausgestaltung kann das Spannmittel ein- oder mehrfach um das Rahmenteil des Fahrrads herumgeschlungen werden und dabei den zu transportierenden Gegenstand wie z.B. eine eng zusammengefaltete Regenjacke zwischen sich und dem Rahmenteil einklemmen. Mit dem am Haltekopf angeschlossenen Montageelement wird das Spannmittel an der Anschlussschraube festgelegt. Bei dem Rahmenteil kann es sich bevorzugt um das Ober- oder Unterrohr des Fahrradrahmens handeln.

Damit zuverlässig sichergestellt ist, dass der Haltekopf im montierten Zustand der Anschlussschraube sich in einem ausreichend großen Abstand vom Rahmenteil befindet, um das Montageelement daran anschließen zu können, ist bevorzugt vorgesehen, dass die Befestigungsschraube zwischen ihrem vorderen Gewindeabschnitt und dem rückwärtigen Haltekopf mit einem den Abstand definierenden Distanzabschnitt versehen oder versehbar ist, der im Querschnitt größer als der Gewindeabschnitt und kleiner als der Haltekopf ist. Der Distanzabschnitt kann dabei in vorteilhafter Weise als auf den Gewindeschaft der Befestigungsschraube aufgesteckte Distanzhülse ausgestaltet sein.

Das Spannmittel ist vorzugsweise an seinen beiden Endbereichen mit Montageelementen zum Anschluss an an mindestens einem Rahmenteil des Fahrrads angeordneten Anschlussschrauben versehen. Die Befestigungseinrichtung kann dann wahlweise an einem der beiden Enden des Spannmittels oder auch an beiden Enden geöffnet werden, indem das Montagelement an dem betreffenden Ende vom Haltekopf der jeweiligen Anschlussschraube demontiert wird.

Vorzugsweise weist das Spannmittel eine Länge zwischen seinen beiden Endbereichen auf, die so bemessen ist, dass das Spannmittel unter Dehnung mit wenigstens einer, vorzugsweise mehreren Umschlingungen um das Rahmenteil montierbar ist. Der am Rahmen zu befestigende Gegenstand wird an das entsprechende Rahmenteil, also insbesondere an das Ober- oder Unterrohr angelegt und dann mit dem Spannmittel, das an seinem einen Endbereich bereits am Fahrrad befestigt ist, unter ausreichender Dehnung so oft zusammen mit dem Rahmenteil umschlungen, dass das Montagelement am anderen Endbereich des Spannmittels unter ausreichend großer Zugkraft im Spannmittel an dem Haltekopf der dafür vorgesehenen Anschlussschraube montiert werden kann. Der Gegenstand wird dadurch von dem Spannmittel zuverlässig an dem Rahmenrohr befestigt.

Als besonders vorteilhaft hat es sich erwiesen, wenn das Montageelement mit einem entriegelbaren Rastelement versehen ist, das im am Haltekopf montierten Zustand einen von diesem gebildeten Vorsprung formschlüssig hintergreift und das Montageelement lösbar formschlüssig an der Anschlussschraube verriegelt. Dadurch kann sich gestellt werden, dass sich die Befestigungseinrichtung nicht von selbst öffnet, indem das Montageelement des Spannmittels vom Haltekopf abspringt, beispielsweise wenn es bei einer Fahrt im unwegsamen Gelände zu größeren stoßartigen Belastungen auf das Rad und die damit transportierten Gegenstände kommt.

Bei dem Spannmittel kann es sich vorzugsweise um einen gummielastischen Spanngurt handeln.

Weitere Merkmale und Vorteile der Erfindungen ergeben sich aus der nachfolgenden Beschreibung und der Zeichnung, worin eine bevorzugte Ausführungsform der Erfindung anhand eines Beispiels illustriert ist. Es zeigt:
- Fig.1: eine am Oberrohr eines Fahrradrahmes angebrachte Befestigungseinrichtung nach der Erfindung in einer perspektivischen Ansicht von schräg unten;
- Fig.2: den Gegenstand der Fig.1 in einer Darstellung von schräg oben mit einem von der Befestigungseinrichtung am Fahrradrahmen befestigten Gegenstand; und
- Fig.3: das an einem Endbereich des Spannmittels der Befestigungseinrichtung vorgesehene Montageelement im an einer Anschlussschraube montierten Zustand in einer perspektivischen Darstellung.

In der Zeichnung ist mit 10 der Rahmen eines Fahrrads bezeichnet, der in bekannter Weise als Diamantrahmen mit einem hinteren Sattelrohr 11, einem vorderen Steuerrohr 12 sowie einem Unterrohr 13 und einem Oberrohr 14 ausgestaltet ist, die sich zwischen dem Sattelrohr 11 und dem Steuerrohr 12 erstrecken. Es versteht sich, dass auch ein Fahrradrahmen anderer Bauart für die Erfindung zum Einsatz kommen kann. Im Übrigen soll der Begriff "Fahrrad" im Zusammenhang mit der Erfindung im weitesten Sinne verstanden werden und die verschiedensten Bauarten eines solchen Fahrzeugs mit umfassen, einschließlich (und nicht darauf beschränkt) Fahrräder mit elektrischen oder nicht-elektrischem Hilfsantrieb wie E-Bikes, Pedelecs, dreirädrige Fahrräder und dergleichen.

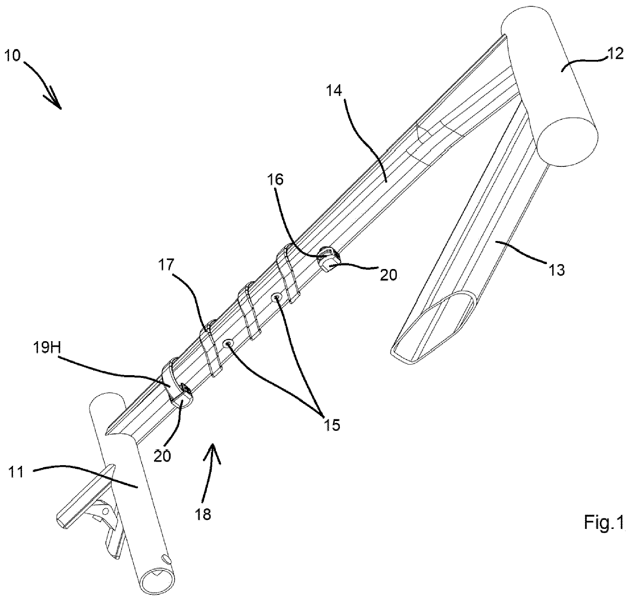

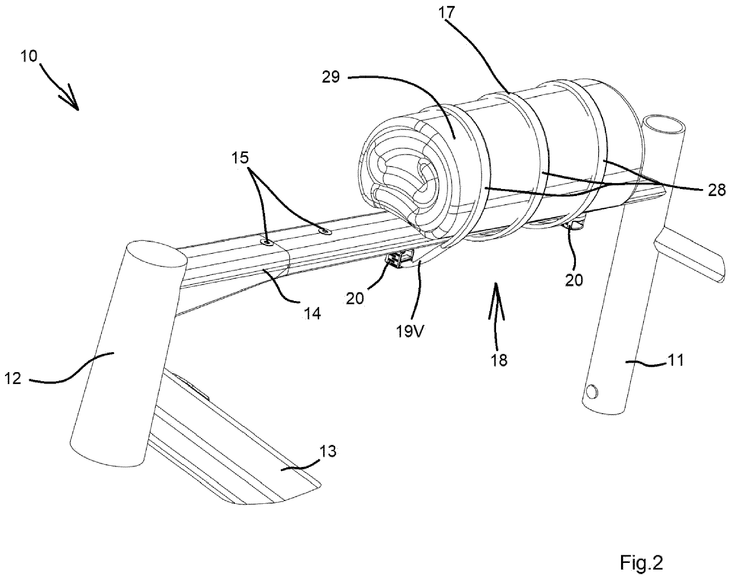

Wie man erkennt, sind an dem Fahrradrahmen 10 in bekannter Weise eine Reihe Gewindeanschlüsse 15 vorgesehen, nämlich bei dem gezeigten Ausführungsbeispiel insbesondere zwei Gewindebohrungen an der Oberseite (Fig.2) und vier Gewindebohrungen an der Unterseite (Fig.1) des Oberrohrs 14. An dem jeweils vorderen und hinteren der vier Gewindeanschlüsse 15 an der Unterseite des Oberrohrs sind Anschlussschrauben 16 montiert, die für die Montage eines elastischen, länglichen Spannmittels 17 einer insgesamt mit 18 bezeichneten, erfindungsgemäßen Befestigungseinrichtung dienen. Bei dem Spannmittel handelt es sich um einen gummielastischen Spanngurt, der an seinen beiden Endbereichen 19V, 19H jeweils mit einem Montagelement 20 versehen ist. Mit den beiden Montageelementen 20 kann das Spannmittel lösbar an den beiden Anschlussschrauben 16 befestigt werden. Zu diesem Zweck weisen die Anschlussschrauben jeweils einen Haltekopf 21 auf, dessen Querschnitt größer ist als der Querschnitt des in die Gewindebohrung 15 am Oberrohr 14 eingeschraubten Gewindeschafts 22 der Anschlussschraube 16. Auf den Gewindeschaft 22 ist jeweils eine Distanzhülse 23 aufgesteckt, die dafür sorgt, dass im fest montierten Zustand der Anschlussschrauben sich deren jeweiliger Haltekopf im Abstand vom Oberrohr 14 befindet und bestimmungsgemäß von dem Montageelement 20 übergriffen werden kann.

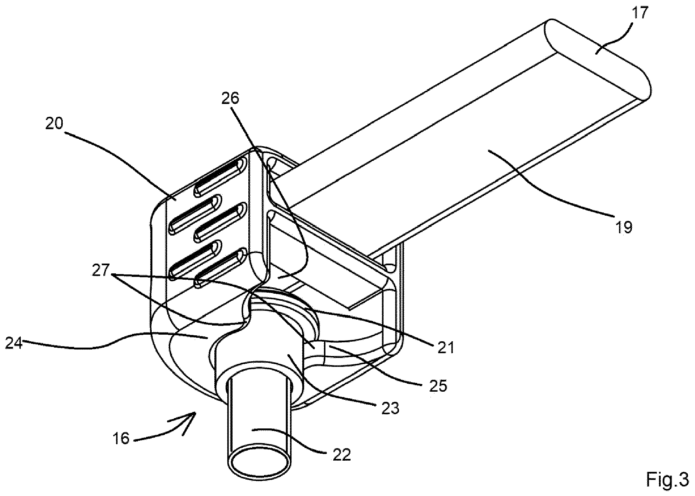

In Fig.3 kann man die Art der Befestigung am besten erkennen. Man sieht, dass das Montageelement 20, das aus einem stabilen Kunststoff, aus Metall oder einem anderen geeigneten Werkstoff bestehen kann, an seiner Unterseite eine Hakenplatte 24 aufweist. Diese ist mit einer in ihrer Breite an den Durchmesser der Distanzhülse 23 angepassten, etwa U-förmige Aussparung 25 versehen. Oberhalb der Hakenplatte bildet das Montageelement 20 eine Aufnahme 26 für den Haltekopf 21, der im am Fahrradrahmen montierten Zustand des Spannmittels vollständig vom dem Montagelement übergriffen wird. Die in der federelastisch ausgeführten Hakenplatte 24 ausgebildete Aussparung 25 ist an ihrem offenen Ende mit seitlichen, einwärts gerichteten Haltenasen 27 begrenzt, die bei der Montage des Spannmittels an der Befestigungsschraube unter elastischer Verformung der Hakenplatte von der Distanzhülse ein Stück weit nach außen gedrückt werden und nach deren Vorbeigang an den Haltnasen wieder zurückfedern. Hierdurch ist sichergestellt, dass das Montagelement von der Anschlussschraube, an der es montiert ist, sich auch dann nicht unbeabsichtigt löst, wenn das Spannmittel ungedehnt, also ohne Spannung am Haltekopf angreift. Die Haltenasen 27 bilden also ein Rastelement zur Sicherung des Montagelements an der jeweiligen Anschlussschraube.

Wie man in den Fig. 1 und 2 erkennt, ist das Spannmittel unter mehreren Umschlingungen 28 um das Oberrohr 14 herumgeführt. Einen mitzuführenden Gegenstand, z.B. ein in Fig. 2 gezeigte, zusammengerollte Regenjacke 29, spannt das Spannmittel 17 dabei zwischen sich und dem Oberrohr 14 sicher ein, so dass dieser auch bei Fahrten durch unwegsames Gelände nicht unbeabsichtigt abfallen kann. Die Befestigungseinrichtung 18 kann leicht zur Befestigung von Gegenständen unterschiedlicher Abmessungen dadurch angepasst werden, dass die Anzahl der Umschlingungen 28 um das Rahmenrohr variiert wird. Darüber hinaus können natürlich auch unterschiedliche Gewindebohrungen 15 für die Anschlussschrauben gewählt werden, zwischen denen das Spannmittel dann befestigt wird.

Die Erfindung ist nicht auf das gezeigte und beschriebene Ausführungsbeispiel beschränkt. Vielmehr sind verschiedene Änderungen und Ergänzungen denkbar, ohne den Rahmen der Erfindung zu verlassen. Z.B. ist es möglich, ein Ende des Spannmittels an geeigneter Stelle am Fahrradrahmen festzulegen und ein Öffnen der Befestigungseinrichtung nur am anderen Ende des Spannmittels durch Demontage des dort vorgesehenen Montagelements von der Anschlussschraube zu ermöglichen. Das Rastelement kann auch so gestaltet werden, dass es proaktiv, z.B. durch Drücken eines Entriegelknopfes, geöffnet werden muss, um das Montageelement vom Haltekopf der Anschlussschraube abnehmen zu können. Das Spannmittel kann - zusätzlich zu seiner Elastizität - längenverstellbar ausgeführt sein, z.B. indem es (teilweise) doppelt gelegt ist, wobei die beiden Teile mit einer längs verschieblichen Schnalle relativ zueinander verstellt werden können.

## Patentansprüche

1. An einem Fahrrad montierbare Befestigungseinrichtung, im Wesentlichen bestehend aus einem elastischen, länglichen Spannmittel (17), das mindestens an einem Endbereich (19) mit einem Montageelement (20) zur formschlüssigen Ankopplung an einem Haltekopf (21) einer Anschlussschraube (16) versehen ist, wobei die Anschlussschraube (16) an einem geeigneten, an einem Rahmenteil (14) des Fahrrads vorgesehenen Gewindeanschluss (15) so angeschraubt ist, dass sich der Haltekopf (21) bei fest montierter Anschlussschraube (16) in einem Abstand von dem Rahmenteil (14) befindet und von dem Montageelement (20) wenigstens teilweise übergriffen wird.

2. Befestigungseinrichtung nach Anspruch 1, **dadurch gekennzeichnet, dass** die Befestigungsschraube (16) zwischen ihrem vorderen Gewindeabschnitt (22) und dem rückwärtigen Haltekopf (21) mit einem den Abstand definierenden Distanzabschnitt (23) versehen oder versehbar ist, der im Querschnitt größer als der Gewindeabschnitt (22) und kleiner als der Haltekopf (21) ist.

3. Befestigungseinrichtung nach Anspruch 2, **dadurch gekennzeichnet, dass** der Distanzabschnitt (23) als auf den Gewindeschaft (22) der Befestigungsschraube (16) aufgesteckte Distanzhülse ausgestaltet ist.

4. Befestigungseinrichtung nach einem der Ansprüche 1 bis 3, **dadurch gekennzeichnet, dass** das Spannmittel (17) an seinen beiden Endbereichen (19V, 19H) mit Montageelementen (20) zum Anschluss an an mindestens einem Rahmenteil (14) des Fahrrads angeordneten Anschlussschrauben (16) versehen ist.

5. Befestigungseinrichtung nach einem der Ansprüche 1 bis 4, **dadurch gekennzeichnet, dass** das Spannmittel (17) eine Länge zwischen seinen beiden Endbereichen (19) aufweist, die so bemessen ist, dass das Spannmittel (17) unter Dehnung mit wenigstens einer, vorzugsweise mehreren Umschlingungen (28) um das Rahmenteil (14) montierbar ist.

6. Befestigungseinrichtung nach einem der Ansprüche 1 bis 5, **dadurch gekennzeichnet, dass** das Montageelement (20) mit einem entriegelbaren Rastelement (27) versehen ist, das im am Haltekopf (21) montierten Zustand einen von diesem gebildeten Vorsprung formschlüssig hintergreift und das Montageelement (20) lösbar formschlüssig an der Anschlussschraube (16) verriegelt.

7. Befestigungseinrichtung nach einem der Ansprüche 1 bis 6, **dadurch gekennzeichnet, dass** das Spannmittel (17) aus einem gummielastischen Spanngurt besteht.
